# FASCICULE DE BREVET EUROPEEN

(11) **EP 1 406 480 B1**
(45) Date de publication et mention de la délivrance du brevet: **06.09.2006**
(21) Numéro de dépôt: 02764935.9
(22) Date de dépôt: 01.07.2002
(51) Int. Cl.: A01G 27/00, A01G 29/00

(54) **DISPOSITIF D'ARROSAGE INDIVIDUEL POUR PLANTES**
EINZELNE PFLANZENBEWÄSSERUNGSVORRICHTUNG
INDIVIDUAL PLANT WATERING DEVICE

(30) Priorité: 16.07.2001 FR 0109450; 20.03.2002 FR 0203432; 18.04.2002 FR 0204848
(43) Date de publication de la demande: 14.04.2004
(73) Titulaire: Amsellem, Maurice, 69003 Lyon (FR)
(72) Inventeur: Amsellem, Maurice, 69003 Lyon (FR)
(74) Mandataire: Weydert, Robert
(86) Numéro de dépôt international: PCT/FR2002/002273
(87) Numéro de publication internationale: WO 2003/007697

(56) Documents cités:
- FR-A- 2 252 806
- FR-A- 2 673 356
- US-A- 5 896 700
- US-A- 6 128 856
- US-B1- 6 243 986

## Description

La présente invention concerne un raccord permettant de relier un réservoir d'eau et une enceinte poreuse formée par un cône en céramique qui laisse passer lentement cette eau, de façon à réaliser un dispositif permettant de distribuer de façon continue et individuelle de l'eau à des plantes, à proximité de leurs racines, et en quantité prédéterminée, et notamment à des plantes en pot.
Le raccord selon l'invention disposant de plusieurs filetages différents peut s'adapter sur la plupart des bouteilles en plastique du marché lesdites bouteilles étant utilisées comme réservoir d'eau.

Le raccord selon l'invention permet une solidarisation complètement fiable entre la bouteille et le cône poreux. Cette caractéristique est capitale, car le produit est destiné à maintenir en vie des plantes en cas d'absence, donc sans surveillance, en particulier dans des lieux où il faut éviter une inondation (appartements).

On connaît plusieurs dispositifs cherchant à obtenir le même résultat mais qui présentent des inconvénients qui rendent leur exploitation commerciale impossible.

Le brevet français N° 2673356 décrit un bouchon dont la forme tronconique permet de l'adapter à plusieurs dimensions de goulots de bouteille à l'intérieur desquels on l'enfonce.
Les inconvénients de ce dispositif sont les suivants :
- le contact entre le cône et le goulot de la bouteille se fait sur une seule ligne autour du cône et à l'intérieur du goulot, ce qui est insuffisant pour obtenir une bonne solidarisation de ces deux éléments,
- pour obtenir une étanchéite, la partie tronconique doit être en plastique semi-souple, ce qui, encore une fois, ne permet pas une bonne solidarisation entre le cône et la bouteille.
   La conséquence est que lorsqu'elle est pleine, la bouteille peut être entrainée par son poids et se séparer du bouchon. Elle peut alors se vider d'un seul coup provocant une inondation, ce qui rend le disposition inutilisableen appartement, et dans tous les cas où l'utilisateur compte sur la réserve d'eau pour maintenir sa plante en vie.
   Le brevet suisse N° 391368 décrit un autre exemple dans lequel de l'eau est emmagasinée dans un corps creux dont la base pointue est fichée dans la terre. Le corps creux tenant lieu de réservoir et la partie fichée en terre forment un seul emsemble non dissociable, si bien qu'il n'est pas prévu d'utiliser les bouteilles en plastique du commerce, ce qui rend le dispositif encombrant lorsqu'on veut le ranger.
   Le brevet US N° 4300309 décrit un système similaire au précédent avec les mêmes inconvénients.
   Le brevet français N° 2252806 décrit un système similaire au précédent avec les mêmes inconvénients et avec en plus, des mèches qui doivent participer à la distribution de l'eau, ce qui rend l'utilisation peu pratique, car il est nécessaire de bêcher la terre pour y introduire les mèches, le dispositif est donc fait pour être mis à demeure dans le pot, ce qui est contraire au but recherché qui est de fournir un objet dont l'utilisation est occasionnelle.
   Le brevet US N° 6128856 décrit un dispositif d'irrigation comportant un bouchon avec valve rotative, associé d'un côté à un tube relié à un dispositif de dispersion et de l'autre côté à une bouteille qui s'y visse. Les inconvénients de ce dispositif sont
- sa complication, donc son coût ;
- la difficulté pour obtenir le bon réglage,
- le manque de fiabilité probable pour un produit pouvant être souillé par de la terre.
- la nécessité d'un entretien pour maintenir les performances
- un seul type de bouteille peut s'y visser, obligeant l'utilisateur à conserver la bouteille adaptée, donc à s'encombrer.

Le brevet US N° 5896700 décrit un appareil d'irrigation comportant un réservoir d'eau vissé sur un dispositif comportant une pointe destinée à s'enfoncer dans la terre pour y laisser s'écouler l'eau, un filtre étant interposé entre les deux pour contrôler le débit. L'inconvénient étant encore l'encombrement et l'impossibilité d'utiliser un grand choix de bouteilles en plastique du commerce.

On voit, à l'examen des antériorités citées, que si celles-ci proposent des solutions pour l'arrosage de plantes grace à un réservoir d'eau et à un dispositif de distribution de cette eau, aucune ne répond en même temps à toutes les exigences du problème posé qui sont d'associer un moyen connu tel qu'un cône poreux utilisé couramment dans l'irrigation, avec de nombreuses sortes de bouteilles en plastique à jeter, pour obtenir un produit bon marché, destiné à arroser sans surveillance des plantes en pot de façon individuelles pendant les absences de leur propriétaire, et qui soit d'un encombrement réduit pendant les périodes de non utilisation.

Par contre, le raccord selon l'invention répond à toutes ces exigences : en effet, en associant un moyen connu tel qu'un cône poreux avec une bouteille en plastique à jeter, le dispositif selon l'invention permet d'obtenir les résultats suivants :
- on trouve facilement une bouteille adaptée au raccord, car celui-ci porte deux ou plusieurs types de filetages différents.
- la bouteille se fixe solidement à l'enceinte poreuse dont elle ne peut être séparée que par dévissage, ce qui permet d'abandonner en toute confiance le dispositif rempli d'eau, sans surveillance, par exemple pendant les vacances.
- l'encombrement est très réduit : lorsqu'on veut le ranger après usage, par exemple lorsqu'au retour des vacances on veut recommencer à s'occuper soi-même de sa plante, on jette la bouteille et on ne conserve que le cône en céramique associé à son raccord, l'ensemble occupant un volume très réduit, beaucoup plus petit que les dispositif antérieurs.
- aucun réglage n'est nécessaire. Il suffit de se reporter à la notice pour choisir, dans la gamme proposée, la céramique donnant le débit nécessaire pour la plante. On choisit ensuite une bouteille d'une contenance correspondant à la quantité d'eau nécessaire pour la durée d'arrosage désirée (par exemple la durée des vacances).
- enfin, le produit est bon marché, car c'est une pièce en plastique injecté associé à un cône en céramique,

Cet ensemble d'avantages n'existent pas dans les antériorités citées, alors qu'au contraire ils sont rassemblés dans l'invention.

Ces avantages sont décisifs pour le succès commercial du produit. En effet ce produit est destiné à arroser des plantes en pot de façon individuelles pendant les absences de leur propriétaire. Or il n'est pas rare de posséder de nombreuses plantes en pot (parfois une dizaine et plus) et puisqu' il est nécessaire d'avoir autant de dispositifs que de plantes, il faut que ce produit soit très bon marché pour qu'on puisse en acheter beaucoup et facile à ranger dès que le propriétaire revient pour s'occuper lui-même de ses plantes. Il faut aussi que l'on puisse trouver facilement toutes les bouteilles nécessaires pour équiper toutes les plantes et enfin que la mise en place du dispositif soit d'une grande simplicité.

Le nombre des produits non satisfaisants antérieurement proposés, notamment dans les documents cités montre que le problème était posé depuis longtemps.

Les défauts et les complications affectant les solutions proposées prouvent que le problème était difficile à résoudre et prouvent surtout qu'il n'avait pas été résolu.

La solution proposée par l'invention, n'était donc pas évidente, malgré sa simplicité et sans doute à cause de sa simplicité.

En effet, l'inventeur y a consacré cinq années de recherche à temps complet.

Ce n'est qu'après être passé par de nombreuses étapes, avoir réalisé des centaines de prototypes, des milliers d'expérimentations et déposé plusieurs brevets qu'il a pu aboutir, grace à une solution différente de tout ce qui existait jusqu'alors à un produit répondant parfaitement au problème posé.

Pour parvenir à ces résultats, le dispositif conforme à l'invention est un raccord équipé sur l'un de ses côtés d'un moyen de solidarisation avec la base d'un cône poreux et sur l'autre côté de deux moyens, au choix, de solidarisation avec le goulot d'une bouteille ; chacun de ces deux moyens étant compatible avec des pas de vis de bouteilles standard.

L'invention sera bien comprise grâce à la description et aux figures.

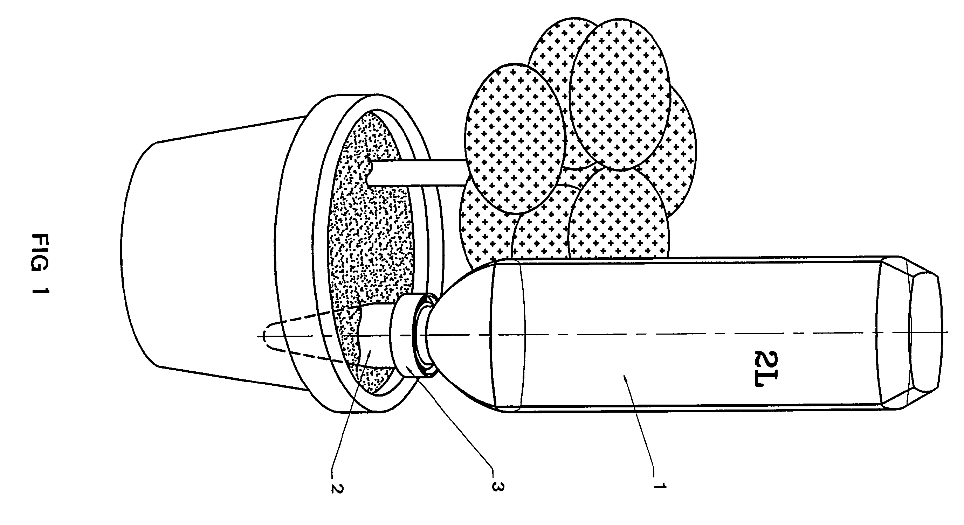

La figure 1 représente une vue d'ensemble d'un dispositif d'arrosage, composé d'une bouteille en plastique standard (1) et d'un cône poreux (2) assemblés par un raccord (3) selon l'invention, et placé au pied d'une plante.
La figure 2 représente un mode de réalisation du raccord (3), vu de dessus et comportant deux dimensions de filetages compatibles avec deux dimensions de filetages de bouteilles.
La figure 3 représente le même raccord vu de dessous.
La figure 4 représente le même raccord coupé selon un plan passant par son axe.
La figure 5 représente le même raccord vu en coupe, associé avec la base d'un cône en matière poreuse.
La figure 6 représente, une autre forme de raccord (3) vu en coupe associé à un cône.
La figure 7 représente, une autre forme de raccord (3) vu en coupe associé à un cône.
La figure 8 représente un adaptateur.

Le dispositif automatique d'arrosage individuel de plantes comporte une bouteille (1) destinée à contenir de l'eau et un cône (2) solidarisés par un raccord (3) qui établit entre eux une liaison rigide permettant l'écoulement de l'eau de la bouteille (1) vers l'intérieur du cône (2) dont les parois sont en tout ou en partie constituées d'une matière poreuse qui sous l'effet de la pression due à la gravité laisse l'eau s'écouler lentement.

Le raccord (3), objet de la présente demande de brevet, est formé d'une pièce en plastique injecté, comportant trois parties coaxiales:
- une partie intermédiaire (4) en forme de disque, ayant en son centre un trou (5),
- une partie (A) située d'un côté du disque (4) et destinée à être fixée à demeure au cône poreux (2). Cette partie A est formée de une ou deux parties en relief, constituées par de la martière comprise entre deux surfaces à peu près cylindriques , et ci-après nommées cylindres.
- une partie (B) située de l'autre côté du disque (4). Cette partie B est formée comme la partie A de un ou deux cylindres ; ceux-ci portant un filetage sur leurs faces ultérieures, et pouvant recevoir par vissage, de façon amovible, une bouteille (1).

Dans les exemples de réalisation représentés sur les figures, le cône (2) creux est en matière poreuse telle que de la céramique.
La base du cône (2) est prolongée par une partie (6) cylindrique creuse destinée à être reliée à la partie (A), par emmanchement de l'une dans l'autre.

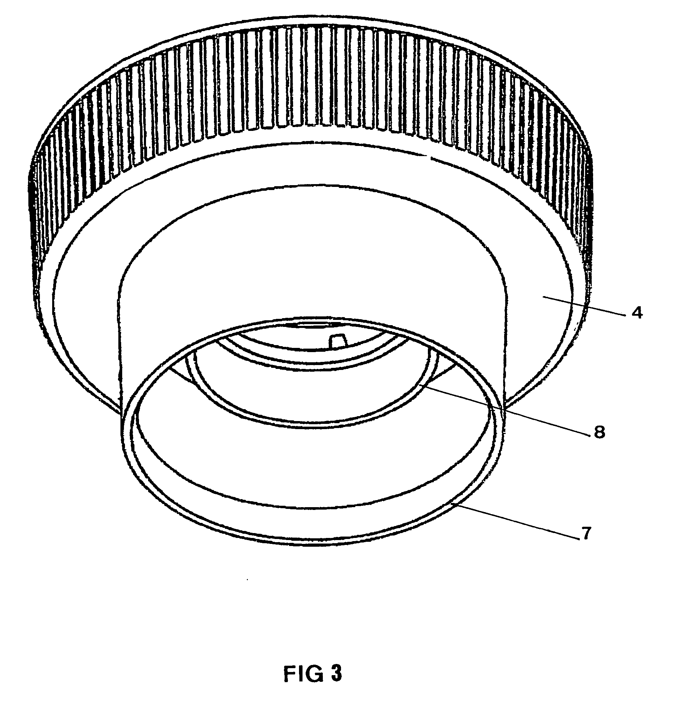

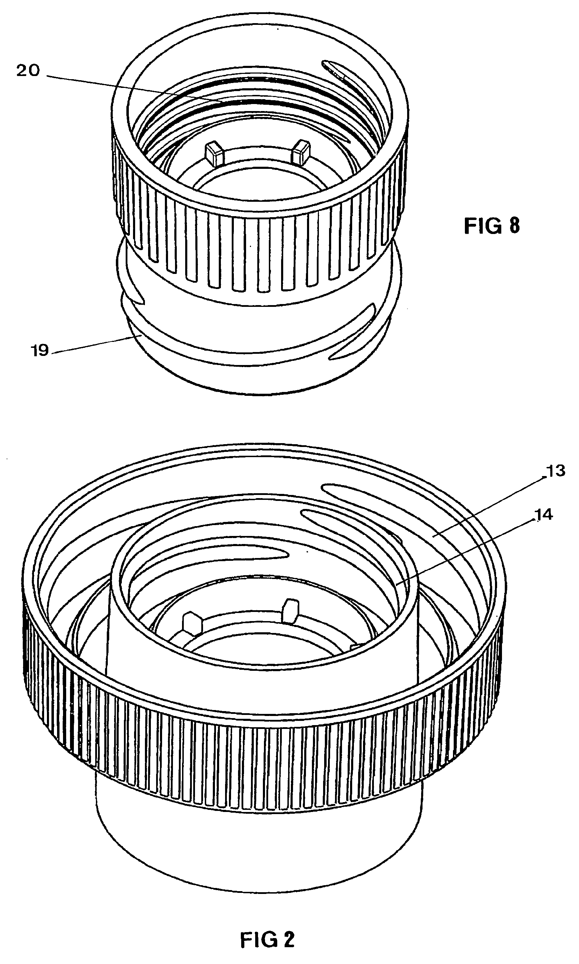

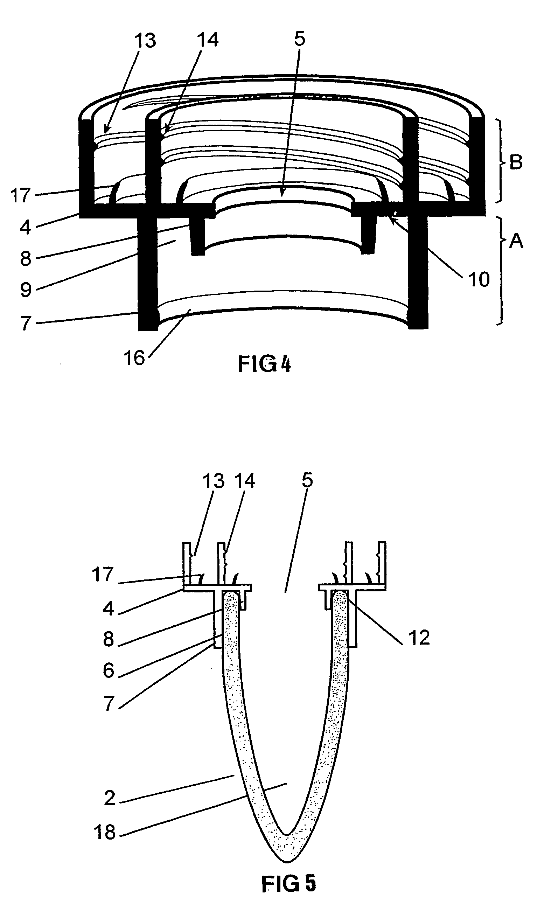

Dans un premier mode de réalisation représenté figures 2, 3, 4 et 5, la partie (A) se compose de deux cylindres (8) et (7), coaxiaux, solidaires du disque (4) par l'un de leurs côtés:
- le cylindre (8) dont le diamètre extérieur est égal au diamètre intérieur de la partie cylindrique (6) du cône est destiné à être introduit à l'intérieur de ladite partie (6) du cône.
- le cylindre (7) dont le diamètre intérieur est égal au diamètre extérieur de la partie cylindrique (6) du cône, est destiné à s'emmancher sur la partie (6) du cône.

Le cylindre (8) qui a le plus petit diamètre ayant un diamètre intérieur égal ou supérieur au diamètre du trou (5).

Lors du montage, la partie (6) du cône est enfoncée en force dans l'espace (9) compris entre les deux cylindres (8) et (7) jusqu'à ce que son bord (12) vienne en contact avec la partie (10) du disque (4) située entre les deux cylindres. On obtient ainsi une étanchéité suffisante pour que les fuites éventuelles soient négligeables par rapport au débit fourni par le cône poreux.

Pour faciliter l'introduction du cône entre les deux cylindres, il est préférable que l'un des deux cylindres soit moins long que l'autre, et de préférence que le cylindre (8) soit plus court que le cylindre (7). Le cylindre (8) peut avoir par exemple une longueur du tiers du cylindre (7). Ainsi, au moment de l'assemblage des deux pièces (2) et (3), on positionne la partie (6) du cône pour qu'elle se place d'abord à l'intérieur du cylindre (7) qui lui sert de guide pour la conduire jusqu'à l'espace (9) dans lequel elle s'enfonce jusqu'à ce que son etrêmité (12) atteigne le fond (10) de cet espace.

Dans le mode préféré de réalisation de l'invention les parois des deux cylindres n'ont pas la même épaisseur, par exemple la paroi du cylindre (8) est moins épaisse que celle du cylindre (7), et est assez fine pour avoir une certaine souplesse, utile pour faciliter l'introduction en force de la partie (6) du cône à l'intérieur de l'espace (9).

A titre d'exemple non limitatif on va décrire ci-dessous un mode de réalisation de l'invention.

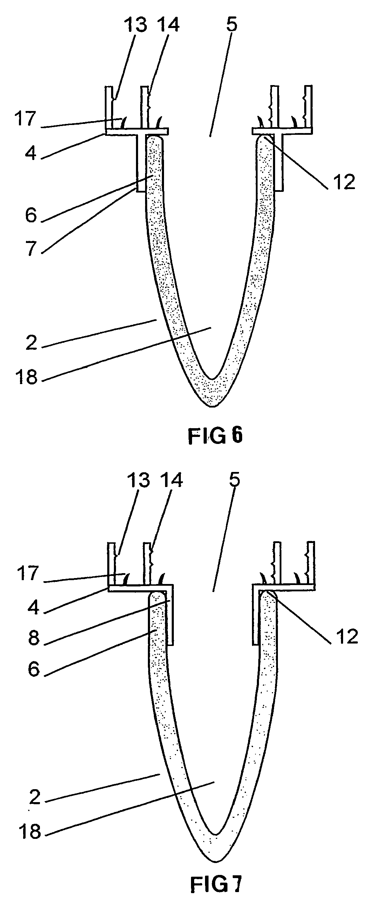

On choisit la forme de cône représentée en coupe figure 5. Le cône lui-même a une longueur d'environ 70 mm avec un sommet légèrement arrondi. Il est composé d'une paroi d'une épaisseur d'environ 5 mm, l'intérieur (18) étant vide. Le cône est prolongé à sa base par une partie cylindrique (6) creuse d'environ 17 mm de long dont les parois ont une épaisseur d'environ 5 mm, son diamètre extérieur étant d'environ 33 mm, et son diamètre intérieur d'environ 23 mm, avec le bord arrondi à son extrémité (12).

On réalise par injection de PVC, un raccord (3) dont la partie A comporte un cylindre (7) dont le diamètre intérieur est d'environ 32,5 mm, et un cylindre (8) dont le diamètre extérieur est d'environ 23 mm.
Le cylindre (7) a une longueur d'environ 15 mm et le cylindre (8) a une longueur d'environ 5 mm.
La paroi du cylindre (7) a une épaisseur d'environ 1,2 mm, ce qui lui confère une rigidité suffisante pour que la liaison entre le raccord (3) et le cône (2) ait une bonne tenue, tandis que la paroi du cylindre (8) n'a qu'une épaisseur d'environ 0,8 millimètre, ce qui lui donne assez de souplesse pour permettre une certaine expansion de l'espace (9), nécessaire pour accepter une tolérance sur l'épaisseur de la partie (6) du cône.

Le cylindre (7) peut porter sur sa face interne, près de son bord libre, un bourrelet circulaire (16) d'une épaisseur d'environ 0,3 mm, destiné àbien serrer la partie (6) du cône pour en assurer une bonne tenue et conforter l'étanchéïté.

Le cylindre (8) peut être d'épaisseur variable, par exemple son diamètre extérieur peut aller en diminuant d'environ 0,3 mm en partant depuis le côté solidaire du disque (4) et en allant vers le bord libre. La face externe du cylindre (8) a alors une forme légèrement cônique et sa base, plus épaisse est plus rigide que son bord libre, plus mince, donc plus souple.
Cette variante a pour fonction de permettre au bord (12) de la partie(6) du cône de bien se présenter à l'entrée de l'espace (9), de s'y introduire en repoussant le bord aminci, pour finir par se positionner au fond de l'espace (9) à l'intérieur duquel il est bien coincé par la partie la plus rigide du cylindre (8).

L'assemblage du cône et du raccord (3) peut se faire à l'aide d'un dispositif spécial comportant un plan horizontal sur lequel on pose le raccord (3), le côté A étant dirigé vers le haut. Un outil portant en creux l'empreinte du cône est fixé sur un bâti de perceuse et un cône est placé à l'intérieur avec son ouverture dirigée vers le bas. En abaissant l'outil, le bord arrondi (12) de la partie (6) se présente à l'extrémité du cylindre (7), dans lequel il amorce sa pénétration grace à son bord arrondi. Quand on continue l'enfoncement le bord (12) arrive au niveau du cylindre (8) qui se positionne bien à l'intérieur de la partie (6) grace au bord arrondi de ladite partie (6) et à la relative souplesse de l'extrémité du cylindre (8) et continue à effectuer sa pénétration en force à l'intérieur du raccord (3) jusqu'à occuper complètement l'espace (9).

Dans un deuxième mode de réalisation représenté figures 6 et 7, la partie (A) se compose d'un seul cylindre :
- soit un cylindre (7) à l'intérieur duquel la partie (6) du cône est introduite (figure 6),
- soit un cylindre (8) destiné à être introduit à l'intérieur de la partie (6) du cône (figure 7).

Dans tous les cas ci-dessus, les diamètres des cylindres (7) et (8) sont réalisés de telle sorte qu'il n'existe pas d'espace entre la ou les parois de la partie (6) du cône et la ou les parois du ou des cylindres (7) et/ou (8).

La partie B du raccord (3) se compose de un ou deux cylindres, de préférence coaxiaux avec toutes les autre parties du raccord, solidaires par l'une de leurs extrémités avec le disque intermédiaire (4), et ayant la face intérieure filetée. Ce ou ces filetages femelles étant destinés à coopérer avec des filetages mâles des bouteilles utilisées à titre de réservoir (1).

Le raccord (3) représenté sur les figures comporte deux filetages différents, un filetage (13) et un filetage (14).

Le filetage (13), de grand diamètre permettant l'utilisation de grandes bouteilles, par exemple de cinq litres; dans ce cas le filetage (14) n'est pas utilisé.

Le filetage (14), plus petit permettant l'utilisation de bouteille de 1,5 litres ; dans ce cas le filetage (13) n'est pas utilisé.

Il peut être prévu à la fin de chaque filetage un épaulement sur lequel vient s'appuyer l'extrémité du goulot de la bouteille (1).

Mais une meilleure étanchéité est obtenue par un moyen classique quelconque utilisé habituellement pour les bouchons de bouteilles en plastique, par exemple une lèvre circulaire cônique (17) sur laquelle le goulot vient s'appuyer.

Pour augmenter le nombre de types de filetages utilisables avec le raccord (3) on prévoit d'y adjoindre un adaptateur comportant un embout fileté mâle (19) compatible avec l'un des deux filetages du raccord (3), comme le serait le goulot d'une bouteille, et ayant de son autre côté un filetage femelle (20) différent. Cet adaptateur est représenté figure 8.

L'utilisation du dispositif selon l'invention décrit dans les exemples précédents est particulièrement simple :
L'utilisateur récupère une bouteille en plastique à jeter et la remplit d'eau ;
Il visse dessus le raccord (3) équipé d'un cône (2) ;
Il retourne l'ensemble de façon à avoir le cône vers le bas et enfonce celui-ci dans la terre, au pied de la plante à irriguer.
Le dispositif étant ainsi maintenu en position sensiblement verticale , il pratique un petit trou avec une épingle à sa partie supérieure qui est le fond de la bouteille pour permettre l'entrée de l'air.

L'invention peut proposer, par exemple, trois types de cône (2) en céramique donnant trois débits moyens différents : 7 cl par 24 H, 20 cl par 24 h et 30 cl par 24 h.

Pour l'arrosage d'un lierre ou d'un zinnia par exemple le débit de 7 cl par 24 h est suffisant et avec une bouteille de 1,5 1, la plante recevra de l'eau pendant 21 jours.

Pour l'arrosage d'un fuschia ou d'un bégonia par exemple, le débit de 20 cl par 24 h permet avec une bouteille de 21 de fournir une quantité d'eau suffisante pendant 10 jours. (une bouteille de 5 litres à 20 cl par 24 h durerait 25 jours)

Pour l'arrosage d'une azalée ou d'une misère par exemple, le débit de 30 cl par 24 h permet avec une bouteille de 5 litres de fournir une quantité d'eau suffisante pendant 16 jours.

Des essais ont été effectués avec des dispositifs selon l'invention.

Avec une bouteille de 1,5 litres d'eau et une céramique de 7cl/24h. Il a été possible de fournir de l'eau en continu à un pot de zinnia pendant 21 jours. La plante a survécu en bonne santé.

Avec une bouteille de 5 litres d'eau et une céramique de 20cl/24 h il a été possible de fournir de l'eau en continu à un pot de fougère pendant 25 jours. La plante a survécu en bonne santé.

La présente invention peut être utilisée dans tous les cas où on souhaite fournir à une plante, de façon sûre, pendant une durée prévue à l'avance, et en continu une certaine quantité d'eau.

La présente invention est particulièrement utile pour le maintien en vie de plantes pendant l'absence de la personne qui les arrose habituellement.

Par contre, bien qu'il puisse être utilisé en permanence pour l'arrosage d'une plante, le dispositif selon l'invention n'est pas fait pour cet usage ;

Dans toute la description qui précède, on a pris comme exemple de pièce (2), un cône ; mais il est entendu que toute autre forme permettant à cette pièce de se planter dans la terre et d'y laisser s'écouler l'eau lentement entrerait dans le cadre de la présente invention.

De même, on a pris comme exemple de matière poreuse, la céramique, mais il est entendu que toute autre matière poreuse permettant de laisser s'écouler de l'eau à différents débits souhaités entrerait dans le cadre de la présente invention.

## Revendications

1. Raccord formé d'une pièce en plastique injecté, permettant de relier un réservoir d'eau (1) et un cône creux (2) en céramique poreuse, de façon à réaliser un dispositif permettant de distribuer de façon individuelle de l'eau à des plantes, notamment à des plantes en pot, à proximité de leurs racines, et en quantité prédéterminée, **caractérisé par le fait qu'**il comporte trois parties coaxiales:
- une partie intermédiaire (4) en forme de disque, ayant en son centre un trou (5),
- une partie (A) formée de un ou deux cylindres, située d'un côté du disque (4) et destinée à être fixée à demeure au cône (2),
- une partie (B) formée comme la partie A de un ou deux cylindres et portant un filetage sur leurs faces intérieures, situés de l'autre côté du disque (4) et pouvant recevoir par vissage, de façon amovible, une bouteille (1).

2. Raccord selon la revendication 1 destiné à être solidaire d'un cône creux en céramique poreuse dont la base est prolongée par une partie (6) cylindrique creuse, **caractérisé par le fait que** la partie A se compose de deux cylindres (8) et (7), coaxiaux, solidaires du disque (4) par l'un de leurs côtés:
- le cylindre (8) dont le diamètre extérieur est égal au diamètre intérieur de la partie cylindrique (6) du cône, destiné à être introduit à l'intérieur de ladite partie (6) du cône.
- le cylindre (7) dont le diamètre intérieur est égal au diamètre extérieur de la partie cylindrique (6) du cône, destiné à s'emmancher sur la partie (6) du cône.

3. Raccord selon la revendication 2 **caractérisé par le fait que** les deux cylindres (8) et (7) n'ont pas la même longueur, et que par exemple, le cylindre (8) est plus court que le cylindre (7).

4. Raccord selon la revendication 3, **caractérisé par le fait que** le cylindre (8) a une longueur qui est environ le tiers de celle du cylindre (7).

5. Raccord selon l'une quelconque des revendications 2, ou 3, ou 4, **caractérisé par le fait que** les parois des deux cylindres n'ont pas la même épaisseur, la paroi du cylindre (8) étant moins épaisse que celle du cylindre (7), et étant assez fine pour avoir une certaine souplesse, utile pour faciliter l'introduction en force de la partie (6) du cône à l'intérieur de l'espace (9) situé entre les deux cylindres (8) et (7).

6. Raccord selon la revendication 5 **caractérise par le fait que** le cylindre (8) peut être d'épaisseur variable, par exemple son diamètre extérieur peut aller en diminuant d'environ 0,3 mm en partant depuis le côté solidaire du disque (4) et en allant vers le bord libre, la face externe du cylindre (8) ayant alors une forme légèrement conique et sa base plus épaisse, donc plus rigide que son bord libre, plus mince, donc plus souple.

7. Raccord selon l'une quelconque des revendications 2, ou 3, ou 4, ou 5, ou 6, **caractérisé par le fait que** le cylindre (7) porte sur sa face interne, près de son bord libre, un bourrelet circulaire (16) d'une épaisseur d'environ 0,3 mm.

8. Raccord selon la revendication 1 destiné à être solidaire d'un cône creux en céramique poreuse dont la base est prolongée par une partie (6) cylindrique creuse, **caractérisé par le fait que** la partie A se compose d'un seul cylindre solidaire du disque (4) par l'un de ses côtés :
- soit un cylindre (8) destiné à être introduit à l'intérieur de la partie (6) du cône.
- soit un cylindre (7) à l'intérieur duquel la partie (6) du cône est introduite.

9. Raccord selon l'une quelconque des revendications précédentes, **caractérisé par le fait que** la partie B du raccord (3) se compose de un ou deux cylindres, de préférence coaxiaux avec toutes les autres parties du raccord, solidaires par l'une de leurs extrémités avec le disque intermédiaire (4), et ayant la face intérieure filetée ; ce ou ces filetages femelles étant compatibles avec des filetages mâles des bouteilles utilisées à titre de réservoir (1).

10. Raccord selon l'une quelconque des revendications précédentes **caractérisé par le fait que** la partie B du raccord (3) se compose de deux cylindres ayant la face intérieure filetée : ce ou ces filetages femelles étant destinés à coopérer avec des filetages mâles des bouteilles utilisées à titre de réservoir (1), le filetage (13), de grand diamètre permettant l'utilisation de grandes bouteilles, par exemple de cinq litres; dans ce cas le filetage (14) n'est pas utilisé ; le filetage (14), plus petit permettant l'utilisation de bouteilles de 1,5 l ; dans ce cas le filetage (13) n'est pas utilisé.

## Claims

1. A connector formed of a piece of injected plastic material, permitting to interconnect a water reservoir (1) and a hollow cone (2) of porous ceramic material to provide a device allowing to individually dispense water to plants, especially potted plants, proximate of their roots, and in predetermined volume, **characterized in that** it comprises three coaxial portions:
- an intermediate portion (4) in form of a disc, having an aperture (5) at its center,
- a portion (A) formed of one or two cylinders, arranged on one side of the disc (4) and adapted to be permanently fixed to the cone (2),
- a portion (B) formed, like portion (A), of one or two cylinders provided with a thread on their inner surfaces, arranged on the other side of the disc (4) and adapted to threadably receive a bottle (1) so as to be removable therefrom.

2. Connector according to claim 1 adapted to be firmly attached to a hollow cone of porous ceramic material whose base is prolonged by a hollow cylindrical portion (6), **characterized in that** the portion (A) consists of two coaxial cylinders (8) and (7) integral with the disc (4) at one of the ends thereof:
- the cylinder (8) whose outer diameter is equal to the inner diameter of the cylindrical portion (6) of the cone, adapted to be introduced into the interior of said cone portion (6),
- the cylinder (7) whose inner diameter is equal to the outer diameter of the cylindrical portion (6) of the cone, adapted to fit on the portion(6) of the cone.

3. Connector according to claim 2, **characterized in that** the two cylinders (8) and (7) do not have the same length, and that, for example, the cylinder (8) is shorter than the cylinder (7).

4. Connector according to claim 3, **characterized in that** the cylinder (8) has a length which is about one third the length of the cylinder (7).

5. Connector according to any one of claims 2, or 3, or 4, **characterized in that** the walls of the two cylinders do not have the same thickness, the wall of the cylinder (8) having a thinner thickness than that of the cylinder (7) and being sufficiently thin so as to have a certain resiliency, appropriate to facilitate forceful introduction of the portion (6) of the cone into the interior of the space (9) delimited between the two cylinders (8) and (7).

6. Connector according to claim 5, **characterized in that** the cylinder (8) is of variable thickness, its external diameter decreasing for example approximately 0.3mm from the end that is integral with the disc (4) towards the free edge thereof, the external face of the cylinder (8) thereby being provided with a slightly conical shape with its base being thicker, thus more rigid, than its free edge, being thinner, and thus more flexible.

7. Connector according to any one of claims 2, or 3, or 4, or 5, or 6, **characterized in that** the cylinder (7) has on its internal surface, adjacent its free edge, a circular bead (16) of a thickness of about 0.3mm.

8. Connector according to claim 1, adapted to be fitted with a hollow cone of porous ceramic material whose base is prolonged by a hollow cylindrical portion (6), **characterized in that** the portion (A) comprises one single cylinder joined to the disc (4) at one of the ends thereof, namely:
- a cylinder (8) adapted to be introduced into the interior of the portion (6) of the cone, or
- a cylinder (7) into the interior of which the portion (6) of the cone is introduced.

9. Connector according to any one of the preceding claims, **characterized in that** the portion (B) of the connector (3) consists of one or two cylinders, preferably coaxial with all the other parts of the connector, integral at one of their extremities with the intermediate disc (4), and having the internal face thereof threaded; this or these female threads being adapted to mate with male threads of bottles used as reservoir (1).

10. Connector according to of any one of the preceding claims, **characterized in that** the portion (B) of the connector (3) comprises two cylinders having the inner face thereof threaded, this or these female threads being adapted to mate with male threads of bottles utilized as reservoir (1), the thread (13) of large diameter permitting use of large bottles, for example of five liters; in which case the thread (14) is not utilized; the thread (14), of smaller diameter, permitting use of a bottle of 1.5 liters; in which case the thread (13) is not utilized.

## Patentansprüche

1. Verbinder bestehend aus einem Kunststoffspritzgussteil, zum Verbinden eines Wasserbehälters (1) und eines Hohlkegels (2) aus porösem Keramikwerkstoff, um eine Baugruppe zu schaffen zur individuellen Wasserzuführung zu Pflanzen, insbesondere Topfpflanzen, in der Nähe ihrer Wurzeln und in vorbestimmter Menge, **dadurch gekennzeichnet, dass** er drei koaxiale Teile aufweist:
- einen Zwischenteil (4) in Form einer Scheibe, mit einem Durchbruch (5) in seiner Mitte,
- einen Teil (A) bestehend aus einem oder zwei Zylindern, auf einer Seite der Scheibe (4) und zur dauerhaften Befestigung am Kegel (2),
einen Teil (B) bestehend, wie der Teil (A), aus einem oder zwei Zylindern und mit Gewinde auf ihren Innenflächen, auf der anderen Seite der Scheibe (4) und zur lösbaren Verschraubung mit einer Flasche (1).

2. Verbinder nach Anspruch 1, der bestimmt ist zum Verbinden mit einem Hohlkegel aus porösem Keramikwerkstoff, dessen Basis durch einen hohlen, zylindrischen Teil (6) verlängert ist, **dadurch gekennzeichnet, dass** der Teil (A) aus zwei koaxialen Zylindern (8) und (7) besteht, die an einem ihrer Enden mit der Scheibe (4) verbunden sind:
- der Zylinder (8) dessen Aussendurchmesser gleich dem Innendurchmesser des zylindrischen Teiles (6) des Kegels ist, und der bestimmt ist zum Einführen in das Innere des Teiles (6) des Kegels,
- der Zylinder (7) dessen Innendurchmesser gleich dem Aussendurchmesser des zylindrischen Teiles (6) des Kegels ist, und der bestimmt ist zum Aufpressen auf den Teil (6) des Kegels.

3. Verbinder nach Anspruch 2, **dadurch gekennzeichnet, dass** die zwei Zylinder (8) und (7) nicht die gleiche Länge aufweisen, und dass z.B. der Zylinder (8) kürzer ist als der Zylinder (7).

4. Verbinder nach Anspruch 3, **dadurch gekennzeichnet, dass** der Zylinder (8) eine Länge aufweist, die etwa ein Drittel der Länge des Zylinders (7) ist.

5. Verbinder nach irgendeinem der Ansprüche 2, oder 3, oder 4, **dadurch gekennzeichnet, dass** die Wände der beiden Zylinder nicht die gleiche Dicke aufweisen, sondern die Wand des Zylinders (8) eine geringere Dicke aufweist als die Wand des Zylinders (7), und dünn genug ist, um eine bestimmte Nachgiebigkeit aufzuweisen, geeignet zum Erleichtern der Einführung unter Kraftanlegung des Teiles (6) des Kegels in das Innere des Raumes (9) zwischen den beiden Zylindern (8) und (7).

6. Verbinder nach Anspruch 5, **dadurch gekennzeichnet, dass** der Zylinder (8) eine variable Dicke aufweisen kann, z.B. eine Verringerung um etwa 0,3 mm seines Aussendurchmessers ausgehend von dem mit der Scheibe (4) verbundenen Ende und bis zum freien Rand, damit die Aussenfläche des Zylinders (8) eine geringfügig kegelförmige Form aufweist und seine dickere Basis somit steifer ist als sein freier Rand, welcher dünner und somit nachgiebiger ist.

7. Verbinder nach einem der Ansprüche 2, oder 3, oder 4, oder 5, oder 6, **dadurch gekennzeichnet, dass** der Zylinder (7) auf seiner Innenfläche, benachbart zu seinem freien Rand, einen kreisförmigen Wulst (16) aufweist mit einer Dicke von etwa 0,3 mm.

8. Verbinder nach Anspruch 1, der bestimmt ist zur Verbindung mit einem Hohlkegel aus porösem Keramikwerkstoff, dessen Basis verlängert ist durch einen hohlen, zylindrischen Teil (6), **dadurch gekennzeichnet, dass** der Teil (A) aus einem einzigen Zylinder besteht der an einem seiner Enden mit der Scheibe (4) verbunden ist:
- entweder ein Zylinder (8), der bestimmt ist zum Einführen in das Innere des Teiles (6) des Kegels,
- oder ein Zylinder (7) in welchen der Teil (6) des Kegels eingesetzt ist.

9. Verbinder nach einem der vorstehenden Ansprüche, **dadurch gekennzeichnet, dass** der Teil (B) des Verbinders (3) aus einem oder zwei Zylindern besteht, vorzugsweise koaxial mit allen anderen Teilen des Verbinders, verbunden an einem seiner bzw. ihrer Enden mit der Zwischenscheibe (4), und mit Gewinde auf der Innenfläche; wobei dieses oder diese Innengewinde passend sind für Aussengewinde der Flaschen, die als Behälter (1) verwendet werden.

10. Verbinder nach einem der vorstehenden Ansprüche, **dadurch gekennzeichnet, dass** der Teil (B) des Verbinders (3) aus zwei Zylindern besteht, deren Innenflächen mit Gewinde versehen sind: wobei dieses oder diese Innengewinde bestimmt sind zur Zusammenwirkung mit Aussengewinden der Flaschen, die als Behälter (1) verwendet werden, wobei das Gewinde (13) mit grossem Durchmesser zum Anschliessen grosser Flaschen, z.B. fünf Liter Flaschen, bestimmt ist, und dabei das Gewinde (14) nicht benutzt wird, und das Gewinde (14) mit kleinerem Durchmesser zum Anschliessen von 1,5 Liter Flaschen bestimmt ist; und dabei das Gewinde (13) nicht benutzt wird.
